# EUROPÄISCHE PATENTANMELDUNG

(11) **EP 1 037 127 A2**
(43) Veröffentlichungstag der Anmeldung: **20.09.2000**
(21) Anmeldenummer: 00102921.4
(22) Anmeldetag: 12.02.2000
(51) Int. Cl.: G05B 19/05

(54) **Verfahren zum fehlertoleranten Betrieb einer programmgesteuerten Anlage**

(30) Priorität: 13.03.1999 DE 19911258
(71) Anmelder: ROBERT BOSCH GMBH, 70442 Stuttgart (DE)
(72) Erfinder: Dappa, Henry, 64319 Pfungstadt (DE); Quintenz, Reinald, 60489 Frankfurt (DE)

(57) **Zusammenfassung**

Es wird ein Verfahren und eine programmgesteuerte Anlage (10) zum fehlertoleranten Betrieb vorgeschlagen. Die programmgesteuerte Anlage (10) wird von einem Programm gesteuert, wobei Betriebstehlern Fehlermeldungen (35) zugeordnet werden, wobei eine Fehlermeldung (35) eine statische Fehlerinformation und eine dynamische Zusatzfehlerinformation umfaßt, wobei die Zusatzfehlerinformation in Abhängigkeit eines während der Laufzeit des Programms auftretenden Betriebsfehlers erzeugt wird, wobei die statische Fehlermeldung den Fehlercode und gegebenenfalls einen Teil des Fehlerprofils aus einer während der Laufzeit des Programms adaptierbaren Fehlertabelle enthält, wobei die Fehlermeldungen in einem gegen Überlauf geschützten Speicherbereich gepuffert werden und nach Filterung auf Basis des Fehlerprofils die gewünschten Fehlerreaktionen veranlassen.

## Beschreibung

### Stand der Technik

Die Erfindung geht aus von einem Verfahren zum fehlertoleranten Betrieb einer Anlage nach der Gattung des Hauptanspruchs und von einer Anlage nach der Gattung des nebengeordneten Anspruchs 14. Es sind Verfahren zum fehlertoleranten Betrieb einer Anlage, die von einem Programm gesteuert wird, bekannt, wobei Betriebsfehlern Fehlermeldungen zugeordnet werden, die in einer Fehlertabelle festgelegt sind. Die Fehlermeldungen sind in diesem Fall vorgegeben und können während der Laufzeit eines Programms nicht geändert werden, so daß eine Anpassung der Funktionsweise der Fehlerbehandlung somit während der Laufzeit nicht möglich ist.

### Vorteile der Erfindung

Das erfindungsgemäße Verfahren mit den Merkmalen des Hauptanspruchs und die erfindungsgemäße Anlage mit den Merkmalen des Anspruchs 14 hat demgegenüber den Vorteil, daß wenigstens eine Fehlermeldung neben den statischen Fehlerinformationen zusätzlich eine dynamische Zusatzfehlerinformation umfaßt, wobei die Zusatzfehlerinformation Informationen umfassen, die in Abhängigkeit des Zustands der Anlage zum Zeitpunkt des Auftretens des Betriebsfehlers erzeugt werden bzw. erzeugbar sind. Hierdurch können Detailinformationen, beispielsweise Variablen-Inhalte, Quellprogramm-Dateiname, Quellprogramm-Zeile oder dergleichen, die zur Fehlerdiagnose zumindest teilweise benötigt werden, an einen Benutzer oder an einen diese Informationen verarbeitenden Programmabschnitt weitergegeben werden.

Durch die in den Unteransprüchen aufgeführten Maßnahmen ist eine vorteilhafte Weiterbildung und Verbesserung des im Hauptanspruch angegebenen erfindungsgemäßen Verfahrens und der im Nebenanspruch 14 angegebenen Anlage möglich.

Besonders vorteilhaft ist, daß das Programm in mehrere Programmabschnitte gegliedert ist, wobei in einem ersten Programmabschnitt Betriebsfehler erkannt werden und wobei die Zusatzfehlerinformation von dem ersten Programmabschnitt erzeugt wird. Dadurch wird die Zusatzfehlerinformation gleich im Anschluß an die Fehlererkennung erzeugt, was eine schnellere und genauere Fehlerdiagnose ermöglicht.

Weiterhin ist von Vorteil, daß der statischen Fehlerinformation ein Fehlercode und/oder ein Fehlerprofil zugeordnet wird. Der Fehlercode und/oder das Fehlerprofil muß daher nicht erzeugt und übertragen werden, so daß für solche statische Fehlerinformationen ein Effizienzgewinn erzielt werden kann.

Weiterhin ist es von Vorteil, daß das Fehlerprofil Fehlerattribute umfaßt, wobei wenigstens ein Fehlerattribut ein Maß für die Schwere des Fehlers angibt. Dadurch kann das Fehlermanagement bei einer programmgesteuerten Anlage sicherer gestaltet werden, da es möglich ist, in Abhängigkeit der Schwere des Betriebsfehlers die Anlage zu steuern. Beispielsweise kann bei der Erkennung eines entsprechend schweren Betriebsfehlers auf einen Notbetrieb der Anlage umgeschaltet werden.

Weiterhin ist von Vorteil, daß der Fehlercode, die Fehlerinformation und/oder das Fehlerprofil in einer Fehlertabelle gespeichert werden. Dadurch können die Fehlerinformationen in einer programmgesteuerten Anlage nach generischen und spezifischen Aspekten einheitlich strukturiert werden. Weiterhin wird dadurch ein heterogenes Erscheinungsbild der Fehlerinformationen und damit des ganzen Programms vermieden, was zu einer Erschwerung der Programmwartung führen würde. Weiterhin kann in einer vorteilhaften Ausführungsform der Erfindung die Fehlertabelle nach der Erstellung und/oder während der Laufzeit des Programms geändert werden.

Weiterhin ist vorteilhaft, wenn der erste Programmabschnitt den Fehlercode und die Zusatzfehlerinformation erzeugt und in Form der wenigstens einen Fehlermeldung an einen zweiten Programmabschnitt weitergibt und/oder in einem der Anlage zugeordneten Pufferspeicher speichert. Dadurch werden lauf zeitunabhängige Fehlerinformationen in Form des Fehlercodes und lauf zeitabhängige Informationen in Form der Zusatzfehlerinformation weitergegeben, was zu einem Effizienzgewinn führt.

Es ist weiterhin von Vorteil, wenn der erste Programmabschnitt zusätzlich zu dem Fehlercode und der Zusatzfehlerinformation zumindest teilweise das Fehlerprofil erzeugt und in Form der wenigstens einen Fehlermeldung an einen zweiten Programmabschnitt weitergibt und/oder in dem Pufferspeicher speichert. Dadurch können auch Fehlerattribute, beispielsweise das Maß für die Schwere des Betriebsfehlers oder dergleichen mit in der Fehlermeldung übertragen werden und bei der Auswertung berücksichtigt werden.

Desweiteren ist von Vorteil, daß in dem zweiten Programmabschnitt eine zentrale Verarbeitung der wenigstens einen Fehlermeldung in Abhängigkeit des Fehlerprofils durchgeführt wird. Dadurch ist es Programmteilen möglich, Informationen über vorgefallene Fehler auszutauschen, ohne dafür direkte Schnittstellen vereinbart zu haben. Auch die Art der Reaktion auf so empfangene Fehlermeldungen ist von den Programmteilen weitgehend frei wählbar. So können eingegangene Fehlermeldungen an den Pufferspeicher, an einen dritten Programmabschnitt oder an eine externe Einrichtung übergeben werden.

Weiterhin ist von Vorteil, daß der Speicherinhalt des Pufferspeichers und/oder die Fehlertabelle auf Anforderung zumindest teilweise an eine externe Einrichtung ausgelesen wird. Dadurch können Fehlermeldungen, für den Fall, daß Ausgabemöglichkeiten, beispielsweise infolge eines schweren Betriebsfehlers fehlen oder unterbrochen sind, in einem Fehlerpuffer abgelegt werden und auf Anforderung an eine externe Einrichtung ausgelesen werden. Zur Ergänzung der Informationen in den Fehlermeldungen des Pufferspeichers kann der Inhalt der Fehlertabelle herangezogen werden.

Vorteilhaft ist weiterhin, daß der Anlage ein Pufferspeicher zugeordnet ist, wobei der Pufferspeicher eine vorgegebene Speicherkapazität aufweist, bei deren Überschreitung der Speicherinhalt zumindest teilweise überschreibbar ist. Dadurch können Fehlermeldungen in einem Fehlerpuffer abgelegt werden und auch dann noch, beispielsweise für Diagnosezwecke oder dergleichen, bereit stehen, wenn Ausgabemöglichkeiten an externe Einrichtungen, beispielsweise an ein anderes Programm, an einen anderen Rechner, an eine angeschlossene Konsole, an eine Datei oder dergleichen, durch einen Betriebsfehler fehlen oder unterbrochen sind. In einer besonders vorteilhaften Ausführungsform ist der Pufferspeicher als zyklischer Puffer realisiert, so daß Pufferüberläufe auszuschließen sind.

### Zeichnung

Ein Ausführungsbeispiel der Erfindung ist in der Zeichnung dargestellt und in der nachfolgenden Beschreibung näher erläutert. Es zeigen
Figur 1 ein Fehlerbehandlungssystem einer programmgesteuerten Anlage,
Figur 2 eine Fehlertabelle mit Einträgen eines Speichers und
Figur 3 ein Ablaufdiagramm des erfindungsgemäßem Verfahrens.

### Beschreibung des Ausführungsbeispiels

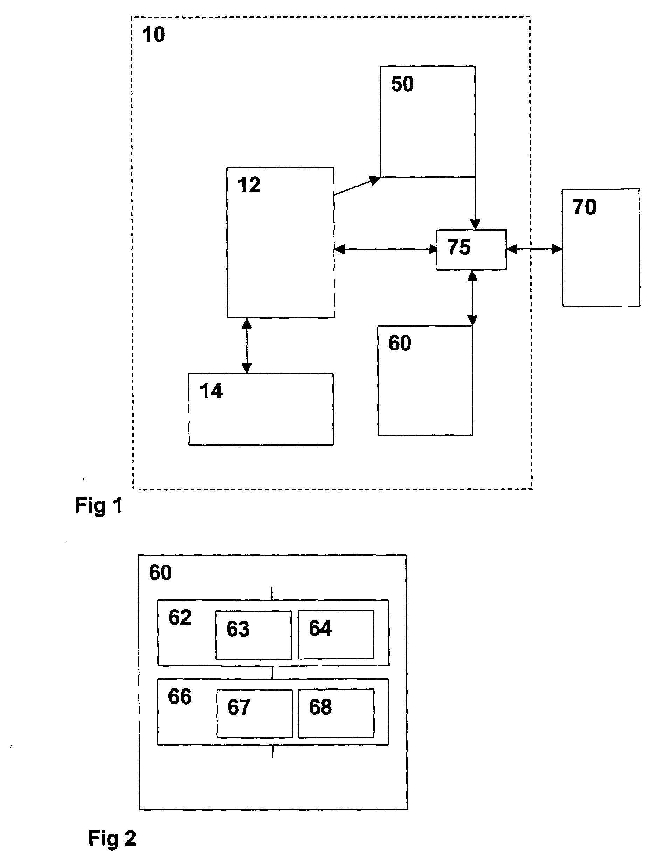

In Figur 1 ist eine programmgesteuerte Anlage 10 dargestellt. Sie umfaßt einen Pufferspeicher 50, einen Speicher 60 und eine Ausgabeschnittstelle 75. Der Pufferspeicher 50 und der Speicher 60 sind beide mit der Ein-Ausgabeschnittstelle 75 verbunden, so daß Daten aus dem Pufferspeicher 50 zur Ein-Ausgabeschnittstelle 75 gesendet werden können und so daß Daten zwischen dem Speicher 60 und der Ein-Ausgabeschnittstelle 75 ausgetauscht werden können.

Weiterhin umfaßt die programmgesteuerte Anlage 10 Mittel zur Datenverarbeitung insbesondere eine Verarbeitungseinheit 12 und eine Speichereinheit 14. Die Speichereinheit 14 ist zum Austausch von Daten mit der Verarbeitungseinheit 12 verbunden. Weiterhin ist die Verarbeitungseinheit 12 mit dem Pufferspeicher 50 und der Ein-Ausgabeschnittstelle 75 derart verbunden, daß Daten von der Verarbeitungseinheit 12 in den Pufferspeicher 50 übertragen werden können und daß zwischen der Verarbeitungseinheit 12 und der Ein-Ausgabeschnittstelle 75 Daten ausgetauscht werden können.

Die Mittel zur Datenverarbeitung 12,14 sind in der beschriebenen Ausführungsform der programmgesteuerten Anlage 10 beispielhaft lediglich einfach vorhanden, können aber in einer vorteilhaften Ausführungsform der programmgesteuerten Anlage 10 mehrfach vorhanden sein.

Die programmgesteuerte Anlage 10 ist über die Ein-Ausgabeschnittstelle 75 mit externen Einrichtungen 70, insbesondere einem Rechner, einer angeschlossenen Konsole oder dergleichen, verbunden.

In Figur 2 ist die Fehlertabelle als Inhalt des Speichers 60 dargestellt. Die Fehlertabelle umfaßt in Figur 2 zwei Einträge. Ein erster Eintrag 62 umfaßt einen ersten Fehlercode 63 und ein erstes Fehlerprofil 64. Der zweite Eintrag 66 umfaßt einen zweiten Fehlercode 67 und ein zweites Fehlerprofil 68. Die Fehlerprofile 64,68 können Fehlerattribute umfassen, insbesondere ein Fehlerattribut, das ein Maß für die Schwere des Betriebsfehlers angibt.

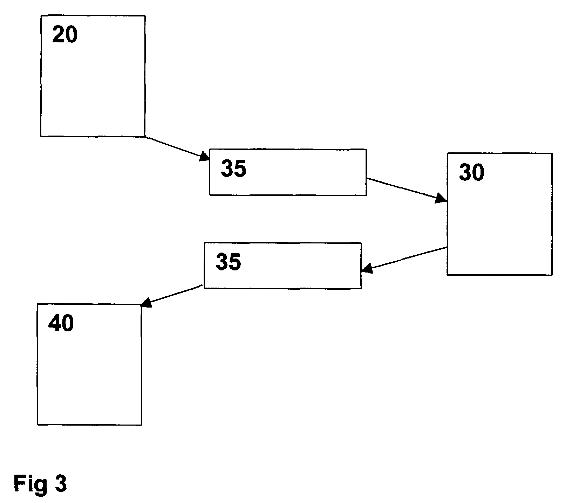

In Figur 3 ist das erfindungsgemäße Verfahren zum fehlertoleranten Betrieb der Anlage 10 in einem Ablaufdiagramm schematisch dargestellt. Die Anlage 10 wird von einem Programm gesteuert, das in mehrere Programmabschnitte 20, 30, 40 gegliedert ist. In einem ersten Programmabschnitt 20 des Programms der Anlage 10 wird in Abhängigkeit eines auftretenden Betriebsfehlers eine Fehlermeldung 35 erzeugt und an einen zweiten Programmabschnitt 30 weitergegeben. Die Fehlermeldung 35 umfaßt einen statischen Anteil und einen dynamischen Anteil. Der statische Anteil der Fehlermeldung ist dem Betriebsfehler fest zugeordnet und unabhängig beispielsweise vom Zeitpunkt des Auftretens des Betriebsfehlers. Der statische Anteil der Fehlermeldung umfaßt den Fehlercode 63,67 und/oder wenigstens teilweise das Fehlerprofil 64,68. Der dynamische Anteil der Fehlermeldung umfaßt die Zusatzfehlerinformation die von dem ersten Programmabschnitt 20 in Abhängigkeit des während der Laufzeit des Programms auftretenden Betriebsfehlers erzeugt wird.

In einer ersten Ausführungsform des erfindungsgemäßen Verfahrens und der erfindungsgemäßen Anlage 10 umfaßt die Fehlermeldung 35 als statischen Anteil (Fehlerinformation) den Fehlercode 63,67 und die Zusatzfehlerinformation als dynamischen Anteil. In einer zweiten Ausführungsform des erfindungsgemäßen Verfahrens und der erfindungsgemäßen Anlage 10 umfaßt die Fehlermeldung 35 die Zusatzfehlerinformation als dynamischen Anteil und den Fehlercode 63,67 sowie zumindest teilweise das Fehlerprofil 64,68 als statischen Anteil(Fehlerinformation). Besonders vorteilhaft ist es, wenn bei der zweiten Ausführungsform die Fehlermeldung 35 in der Fehlerinformation ein Maß für die Schwere des Betriebsfehlers umfaßt.

Die Fehlermeldung 35, die vom ersten Programmabschnitt 20 erzeugt wird, wird dem zweiten Programmabschnitt 30 zur Verarbeitung zugeführt. Der zweite Programmabschnitt 30 führt eine zentrale Verarbeitung der Fehlermeldung 35 durch. Die Fehlermeldung 35 kann von dem zweiten Programmabschnitt 30 an den Pufferspeicher 50, an einen dritten Programmabschnitt 40 und/oder an eine externe Einrichtung 70 übergeben werden. Wenn die Fehlermeldung 35 vom zweiten Programmabschnitt 30 dem dritten Programmabschnitt 40 übergeben wird, dann leitet der dritte Programmabschnitt 40 eine Fehlerreaktion, insbesondere eine Änderung des Speicherinhalts der Speichereinheit 14, die Ausführung eines vierten Programmabschnitts oder dergleichen, ein.

Beim erfindungsgemäßen Verfahren und bei der erfindungsgemäßen Anlage 10 können Fehlerinformationen während der Laufzeit des Programms geändert werden. Eine Anpassung der Funktionsweise der Fehlerbehandlung ist somit während der Laufzeit möglich. Dies geschieht beispielsweise dadurch, daß der Inhalt des Speichers 60, das heißt die Fehlertabelle, geändert wird. Im Speicher 60 ist einem Betriebsfehler ein Eintrag 62,66 zugeordnet. Der Eintrag 62,66 umfaßt den Fehlercode 63,67 und das Fehlerprofil 64,68. Ein wichtiger Teil des Eintrags 62,66 ist das Fehlerprofil 64,68, das die generischen Fehlereigenschaften in Form von Fehlerattributen in sich vereinigt. Zu den Fehlerattributen zählen beispielsweise Fehlerursache, nähere Fehlerumstände, Fehlerschwere, Fehlerort oder dergleichen. Das Fehlerprofil 64,68 mit den Fehlerattributen gehört zusammen mit dem Fehlercode 63,67 zu den Informationen, die statisch sind, das heißt dem Betriebsfehler fest zugeordnet sind.

Als statische Informationen können die Fehlerattribute, das Fehlerprofil und der Fehlercode Teil der Fehlerinformation sein, die als statischer Anteil in der Fehlermeldung 35 enthalten ist. Dabei ist es vorteilhaft, den Fehlerort zumindest teilweise im Fehlercode 63,67 mit zu codieren, das heißt der Fehlercode enthält eine Information über den Fehlerort. Dies hat den Vorteil, daß bei der Analyse des Fehlercodes die Information über den Fehlerort mit berücksichtigt werden kann. Das Fehlerprofil 64,68, das die Fehlerattribute umfaßt, kann durch Änderung der Fehlertabelle geändert werden.

Die Fehlertabelle ist im Speicher 60 abgelegt. So können beispielsweise Fehlerattribute ihre Werte vom Entwickler während der Programmierung zugewiesen bekommen und später, während der Programmlaufzeit, können den Fehlerattributen andere Werte zugewiesen werden. Diese Zuweisung kann in einer vorteilhaften Ausführungsform der Erfindung beispielsweise vom Administrator der Anlage 10 interaktiv vorgenommen werden.

Im Unterschied zu den statischen Fehlerinformationen, die sich schon vor der Laufzeit des Programms bestimmen lassen, sind die Zusatzfehlerinformationen erst zur Laufzeit des Programms in Abhängigkeit des Auftretens des Betriebsfehlers ermittelbar. Die Zusatzfehlerinformationen sind betriebsfehlerspezifisch und werden von dem diagnostizierenden ersten Programmabschnitt 20 zum Zeitpunkt des Betriebsfehlers erzeugt und in einem Datenfeld vorzugsweise fester Länge nach einem vorher vereinbarten Schema abgelegt.

In einer vorteilhaften Ausführungsform des erfindungsgemäßen Verfahrens und der erfindungsgemäßen Anlage 10 ist das Programm so aufgebaut, daß es mehrere erste Programmabschnitte umfaßt, die auf die Diagnose jeweils eines Betriebsfehlers spezialisisert sind. Jedem dieser Betriebsfehler ist eindeutig eine der statischen Fehlerinformationen und einer der Fehlercodes zugeordnet. Die Zuordnung von Fehlerinformation zum Fehlercode 63,67 wird durch deren Speicherung in der Fehlertabelle erreicht. Zur eindeutigen Bestimmung des Betriebsfehlers und zur Information über den Betriebsfehler genügt es also, nur den Fehlercode zu sammeln, die Zusatzfehlerinformation während der Laufzeit des Programms bei Auftreten des Betriebsfehlers zu erzeugen und diese beiden als Fehlermeldung, beispielsweise an externe Einrichtungen, insbesondere an ein anderes Programm, einen anderen Rechner, eine angeschlossene Konsole, eine Datei oder dergleichen, auszugeben.

Falls die Ausgabemöglichkeiten fehlen oder unterbrochen sind, kann die Fehlermeldung auch in dem Pufferspreicher 50, der insbesondere für diesen Fall vorgesehen ist, abgelegt werden. Um Überläufe des Pufferspeichers 50 auszuschließen, ist er in einer vorteilhaften Ausführungsform der Erfindung als zyklischer Pufferspeicher 50 realisiert, in dem bei Platzmangel die jüngsten Einträge die ältesten überschreiben. Der Pufferspeicher 50 hat somit eine vorgegebene Speicherkapazität, bei deren Überschreitung der Speicherinhalt des Pufferspeichers 50 zumindest teilweise überschrieben wird. Dies hat zur Folge, daß Fehlermeldungen 35 im Pufferspeicher 50 nur eine begrenzte Zeit zur Verfügung stehen. In dieser Zeit können sie von außen, beispielsweise von einer externen Einrichtung 70, insbesondere von einem anderen Rechner, einer angeschlossenen Konsole oder dergleichen, gelesen werden.

In einer vorteilhaften Ausführungsform des erfindungsgemäßen Verfahrens und der erfindungsgemäßen Anlage 10 wird insbesondere das Fehlerattribut, das ein Maß für die Schwere des Betriebsfehlers angibt, als Teil der Fehlerinformation mit der Fehlermeldung 35 übertragen, so daß das Maß für die Schwere des Betriebsfehlers auch in dem Pufferspeicher 50 und somit nach Auslesen durch die externe Einrichtung 70 dieser zur Verfügung steht. Dies ist besonders dann sinnvoll, wenn die externe Einrichtung 70 die Fehlertabelle, die im Speicher 60 abgelegt ist, nur mühsam oder gar nicht lesen kann.

Der zweite Programmabschnitt 30 empfängt die Fehlermeldung 35 von dem ersten Programmabschnitt 20. Wenn das Programm mehrere erste Programmabschnitte 20 umfaßt, die auf die Diagnose jeweils unterschiedlicher Betriebsfehler spezialisiert sind, dann empfängt der zweite Programmabschnitt 30 die Fehlermeldung 35 von demjenigen, der ersten Programmabschnitte 20, der für die Diagnose des aufgetretenen Betriebsfehlers zuständig ist. Der zweite Programmabschnitt 30 stellt somit hinsichtlich der Fehlerbehandlung einen zentralen Verteiler von Fehlermeldungen 35 dar, über den die im Programm generierten Fehlermeldungen geleitet werden. Dies dient der gegenseitigen Entkopplung von Programmabschnitten 20,30,40 hinsichtlich ihrer Fehlerbehandlung. Im zweiten Programmabschnitt 30 werden die empfangenen Fehlermeldungen 35 nach ihren Fehlerattributen gefiltert und anschließend weiterverarbeitet. Fehlermeldungen können so einem dritten Programmabschnitt 40 zugeführt werden. In einer vorteilhaften Ausführungsform des erfindungsgemäßen Verfahrens und der erfindungsgemäßen Anlage 10 umfaßt das Programm mehrere dritte Programmabschnitte 40, die die Fehlerreaktion auf jeweils unterschiedliche Betriebsfehler ausführen. In diesem Fall wird die Verteilung der unterschiedlichen Fehlermeldungen 35 auf die verschiedenen dritten Programmabschnitte 40 vom zweiten Programmabschnitt 30 über einen Callback-Mechanismus durchgeführt. Dadurch ist es möglich, daß verschiedene Programmabschnitte 20,30,40 Informationen über vorgefallene Betriebsfehler austauschen, ohne dafür direkte Schnittstellen vereinbart zu haben. Auch die Art der Reaktion auf so empfangene Fehlermeldungen 35 ist von den Programmabschnitten 20,30,40 weitgehend frei

In einer vorteilhaften Ausführungsform des erfindungsgemäßen Verfahrens und der erfindungsgemäßen Anlage 10 sind nicht dargestellte vierte Programmabschnitte vorgesehen, die Routinearbeiten, wie beispielsweise die Vorhaltung von Speicherplatz, die Aufzeichnung der Aufrufhierarchie von Programmabschnitten, die Aufzeichnung von Fehlerreaktionen, die Einfügung der Uhrzeit oder dergleichen, übernehmen.

Die externen Einrichtungen 70 kommunizieren mit der Anlagen 10 über die Ein/Ausgabeschnittstelle 75. Im Falle eines Betriebsfehlers der von dem Programm nicht beherrschbar ist, können die zuletzt erzeugten Fehlermeldungen 35, die sich im Pufferspeicher 50 befinden, von der externen Einrichtung 70 über die Ein-Ausgabeschnittstelle 75 aus dem Pufferspeicher 50 ausgelesen werden. Die Fehlermeldungen 35 umfassen im wesentlichen den Fehlercode 63,67 und die Zusatzfehlerinformationen. Aus dem Fehlercode 63,67 können anhand der in der Fehlertabelle abgelegten Einträge 62,66 die anderen Informationen erschlossen werden, die dem Betriebsfehler statisch zugeordnet sind. Hierzu ist die externe Einrichtung 70 in der Lage, an die Ein-Ausgabeschnittstelle 75 eine Anforderung zu senden, die das Auslesen des Speichers 60 und damit der Fehlertabelle zumindest teilweise erlaubt. Falls dies nur schwer möglich ist, umfaßt die Fehlermeldung 35, die im Pufferspeicher 50 abgelegt ist, vorteilhafterweise zumindest einen Informationsanteil in ihrer Fehlerinformation, der dem Fehlerattribut entspricht, das ein Maß für die Schwere des Betriebsfehlers angibt. Die im Pufferspeicher 50 abgelegten Fehlermeldungen 35 können in diesem Fall von der externen Einrichtung 70 in vorteilhafter Weise analysiert werden, weil beispielsweise gezielt auf die Analyse von relativ schweren Betriebsfehlern eingegangen werden kann.

Das Programm zum fehlertoleranten Betrieb der Anlage 10 wird von den Mitteln 12,14 zur Datenverarbeitung der programmgesteuerten Anlage 10 ausgeführt. Im Ausführungsbeispiel sind die Mittel 12,14 zur Datenverarbeitung lediglich in einfacher Ausführung angegeben. In einer vorteilhaften Ausführungsform sind jedoch die Mittel 12,14 zur Datenverarbeitung in der programmgesteuerten Anlage 10 mehrfach vorhanden, so daß verschiedene Programmabschnitte von verschiedenen der mehrfach vorhandenen Mitteln 12,14 zur Datenverarbeitung ausgeführt werden. Der Betrieb der programmgesteuerten Anlage 10 kann auf diese Weise sicherer gestaltet werden, wenn beispielsweise der zweite Programmabschnitt 30 auf speziell dafür vorgesehenen Mitteln 12,14 zur Datenverarbeitung ausgeführt wird. Der erste Programmabschnitt 20 und der dritte Programmabschnitt 40 werden dann beispielsweise von separaten Mitteln 12,14 zur Datenverarbeitung ausgeführt.

Die Erfindung bezieht sich auf beliebige programmgesteuerte Anlagen. Insbesondere ist ein fehlertoleranter Betrieb einer programmgesteuerten Anlage sinnvoll für Telekommunikationsanlagen, insbesondere Nebenstellenanlagen. Ein Ausfall einer solchen Anlage aufgrund eines Betriebsfehlers führt dazu, daß Telekommunikationsaufgaben zumindest teilweise nicht mehr ausgeführt werden können, was zu kritischen Situationen, insbesondere bei Notsituationen, Störfallsituationen oder dergleichen, führen kann und weshalb das erfindungsgemäße Verfahren und die erfindungsgemäße programmgesteuerte Anlage 10 in diesem Bereich besonders vorteilhaft eingesetzt werden können.

In einer besonders vorteilhaften Ausführungsform der Erfindung kann der Inhalt der Fehlertabelle auch während der Laufzeit des Programms verändert werden. Dadurch kann das Fehlermanagement des Programms und der Anlage, beispielsweise vom Administrator, insbesondere Telekommunikationsanlagenadministrator, den aktuellen Anforderungen des Betriebes angepaßt werden. Eine Möglichkeit dazu besteht beispielsweise darin, daß in einem ersten Schritt eine Kopie der Fehlertabelle im Speicher 60 abgelegt wird und anschließend in einem zweiten Schritt die erstellte Kopie der Fehlertabelle als die gültige Fehlertabelle definiert wird. Daraufhin können in der ursprünglichen Fehlertabelle Änderungen vorgenommen werden, ohne daß der Betrieb der programmgesteuerten Anlage 10 beinträchtigt ist. In einem letzten Schritt wird die modifizierte ursprüngliche Fehlertabelle wieder als gültige Fehlertabelle definiert.

## Patentansprüche

1. Verfahren zum fehlertoleranten Betrieb einer Anlage (10), insbesondere einer Nebenstellenanlage, die von einem Programm gesteuert wird, wobei Betriebstehlern der Anlage Fehlermeldungen zugeordnet werden, wobei Fehlermeldungen (35) statische Fehlerinformationen umt aßen, dadurch gekennzeichnet, daß wenigstens eine Fehlermeldung (35) neben der statischen Fehlerinformation zusätzlich eine dynamische Zusatzfehlerinformation umfaßt, wobei die Zusatzfehlerinformation Informationen umfaßt, die in Abhängigkeit des Zustandes der Anlage (10) zum Zeitpunkt des Auftretens des Betriebsfehlers erzeugt werden.

2. Verfahren nach Anspruch 1, dadurch gekennzeichnet, daß das Programm in mehrere Programmabschnitte gegliedert ist, wobei in einem ersten Programmabschnitt (20) Betriebsfehler erkannt werden und wobei die Zusatzfehlerinformation von dem ersten Programmabschnitt (20) erzeugt wird.

3. Verfahren nach einem der vorhergehenden Ansprüche, dadurch gekennzeichnet, daß der Fehlerinformation ein Fehlercode (63,67) und/oder ein Fehlerprofil (64,68) zugeordnet wird.

4. Verfahren nach Anspruch 3, dadurch gekennzeichnet, daß das Fehlerprofil Fehlerattribute umfaßt, wobei wenigstens ein Fehlerattribut ein Maß für die Schwere des Fehler angibt.

5. Verfahren nach Anspruch 3 oder 4, dadurch gekennzeichnet, daß der Fehlercode (63,67) , die Fehlerinformation und/oder das Fehlerprofil (64,68) in einer Fehlertabelle gespeichert werden.

6. Verfahren nach einem der Ansprüche 3 bis 5, dadurch gekennzeichnet, daß der Anlage (10) ein Pufferspeicher (50) zugeordnet ist, daß der erste Programmabschnitt (20) den Fehlercode (63,67) und die Zusatzfehlerinformation erzeugt und in Form der wenigstens einen Fehlermeldung (35) an einen zweiten Programmabschnitt (30) weitergibt und/oder in dem Pufferspeicher (50) speichert.

7. Verfahren nach einem der Ansprüche 3 bis 5, dadurch gekennzeichnet, daß der Anlage (10) ein Pufferspeicher (50) zugeordnet ist, daß der erste Programmabschnitt (20) den Fehlercode (63,67), die Zusatzfehlerinformation und zumindest teilweise das Fehlerprofil (64,68) erzeugt und in Form der wenigstens einen Fehlermeldung (35) an einen zweiten Programmabschnitt (30) weitergibt und/oder in dem Pufferspeicher (50) speichert.

8. Verfahren nach einem der Ansprüche 3 bis 7, dadurch gekennzeichnet, daß in dem zweiten Programmabschnitt (30) eine zentrale Verarbeitung der wenigstens einen Fehlermeldung (35) in Abhängigkeit des Fehlerprofils (64,68) durchgeführt wird.

9. Verfahren nach Anspruch 7 oder 8, dadurch gekennzeichnet, daß in dem zweiten Programmabschnitt (30) die wenigstens eine eingegangene Fehlermeldung (35) an den Pufferspeicher (50) übergeben wird.

10. Verfahren nach Anspruch 7 oder 8, dadurch gekennzeichnet, daß durch den zweiten Programmabschnitt (30) die wenigstens eine eingegangene Fehlermeldung (35), vorzugsweise in Abhängigkeit eines Filters, an einen dritten Programmabschnitt (40) übergeben wird, wobei durch den dritten Programmabschnitt (40) eine Fehlerreaktion durchgeführt wird.

11. Verfahren nach Anspruch 7 oder 8, dadurch gekennzeichnet, daß durch den zweiten Programmabschnitt (30) die wenigstens eine eingegangene Fehlermeldung (35) an eine externe Einrichtung (70) übergeben wird.

12. Verfahren nach einem der Ansprüche 6 bis 9, dadurch gekennzeichnet, daß der Speicherinhalt des Pufferspeichers (50) auf Anforderung zumindest teilweise an eine externe Einrichtung (70) ausgelesen wird.

13. Verfahren nach Anspruch 12, dadurch gekennzeichnet, daß die Fehlertabelle auf Anforderung zumindest teilweise an die externe Einrichtung (70) ausgelesen wird.

14. Anlage (10), insbesondere Nebenstellenanlage, die von einem Programm gesteuert wird und die Mittel (12,14) aufweist, Betriebsfehlern Fehlermeldungen zuzuordnen, wobei Fehlermeldungen (35) statische Fehlerinformationen umfaßen, dadurch gekennzeichnet, daß wenigstens eine Fehlermeldung (35) neben der statischen Fehlerinformation zusätzlich eine dynamische Zusatzfehlerinformation umfaßt, wobei die Zusatzfehlerinformation Informationen umfaßt, die in Abhängigkeit des Zustands der Anlage (10) zum Zeitpunkt des Auftretens des Betriebsfehlers erzeugbar sind.

15. Programmgesteuerte Anlage (10) nach Anspruch 14, dadurch gekennzeichnet, daß einer Fehlerinformation ein Fehlercode (63,67) und/oder ein Fehlerprofil (64,68) zugeordnet ist, daß der Anlage (10) ein Speicher (60) zugeordnet ist, wobei der Fehlercode (63,67), die Fehlerinformation und/oder das Fehlerprofil (64,68) in dem Speicher (60) als Fehlertabelle gespeichert sind.

16. Programmgesteuerte Anlage (10) nach Anspruch 14 oder 15, dadurch gekennzeichnet, daß der Anlage (10) ein Pufferspeicher (50) zugeordnet ist, wobei der Pufferspeicher (50) eine vorgegebene Speicherkapazität aufweist, bei deren Überschreitung der Speicherinhalt zumindest teilweise überschreibbar ist.

17. Programmgesteuerte Anlage (10) nach Anspruch 15 oder 16, dadurch gekennzeichnet, daß die Mittel (12,14) den Fehlercode (63,67) und die Zusatzfehlerinformation erzeugen, weiterverarbeiten und/oder in dem Pufferspeicher (50) speichern.

18. Programmgesteuerte Anlage (10) nach Anspruch 15 oder 16, dadurch gekennzeichnet, daß die Mittel (12,14) den Fehlercode (63,67) , die Zusatzfehlerinformation und wenigstens teilweise das Fehlerprofil (64,68) erzeugen, weiterverarbeiten und/oder in dem Pufferspeicher (50) speichern.

19. Programmgesteuerte Anlage (10) nach einem der Ansprüche 14 bis 18, dadurch gekennzeichnet, daß die Mittel (12,14) eine zentrale Verarbeitung der wenigstens einen Fehlermeldung (35) in Abhängigkeit des Fehlerprofils (64,68) durchführen.
